# EUROPÄISCHE PATENTSCHRIFT

(11) **EP 2 084 212 B1**
(45) Veröffentlichungstag und Bekanntmachung des Hinweises auf die Patenterteilung: **22.12.2010**
(21) Anmeldenummer: 07821551.4
(22) Anmeldetag: 19.10.2007
(51) Int. Cl.: C08G 69/04, C08G 69/16, C08G 69/18, C08G 69/46

(54) **VERWENDUNG VON WENDELROHRVERDAMPFERN BEI DER HERSTELLUNG VON POLYAMIDEN**
APPLICATION OF COIL TUBE EVAPORATORS FOR THE PRODUCTION OF POLYAMIDES
UTILISATION D'ÉVAPORATEUR À TUBE HÉLICOÏDAL DANS LA PRODUCTION DE POLYAMIDES

(30) Priorität: 24.10.2006 EP 06122862
(43) Veröffentlichungstag der Anmeldung: 05.08.2009
(73) Patentinhaber: BASF SE, 67056 Ludwigshafen (DE)
(72) Erfinder: WEISS, Robert, 67281 Kirchheim (DE); BECKER, Jens, 67304 Eisenberg (DE)
(86) Internationale Anmeldenummer: PCT/EP2007/061187
(87) Internationale Veröffentlichungsnummer: WO 2008/049786

(56) Entgegenhaltungen:
- EP-A- 0 459 206
- WO-A-97/08224
- WO-A-99/10408
- DE-A1- 10 335 451
- DE-A1- 19 925 906
- US-A- 5 703 204

## Beschreibung

Die Erfindung betrifft die Verwendung von Wendelrohrverdampfern bei der Herstellung von Polyamiden und Verfahren zur Herstellung von Polyamiden auf Basis von Polyamid 6.

Es ist bekannt, dass sich bei der Polymerisation von beispielsweise Caprolactam zu Polyamid 6 (PA6) ein temperaturabhängiges Gleichgewicht einstellt, das zu einem wasserlöslichen Anteil des Endprodukts üblicherweise im Bereich von 10 bis 13 % führt. Dieser nicht umgesetzte Anteil muss aus dem Polyamid herausgelöst werden, bevor dieses weiter verarbeitet werden kann.

Üblicherweise erfolgt das Herauslösen durch Extraktion mit Wasser. Das Extraktionswasser muss dann wieder eingedickt werden. Aus ökonomischen Gründen ist es bevorzugt, den organischen Anteil wieder in den Produktionsprozess einzuschleusen.

Die EP-B-0 847 415 betrifft ein Verfahren zur kontinuierlichen Herstellung von Polyamid 6 unter Verwendung von Rücklactam. Bei der beschriebenen Herstellung von Polyamid 6 unter Verwendung von Rücklactam erfolgt die Weiterverarbeitung des Rücklactams mit im Lactam gelösten Oligomeren, indem das Rücklactam unter Zusatz von Frischlactam in ein geschlossenes System eingebracht und unter Druck durch Hydrolyse bei Wassergehalten von 3 bis 15 % und Temperaturen im Bereich von 220 bis 280 °C in der schmelzflüssigen Phase behandelt wird. Es wird ein insgesamt vierstufiges Verfahren beschrieben, wobei die Aufkonzentrierung durch einen Wärmetauscher und ein Regelventil erfolgt. Um das Ausfallen von Oligomeren bzw. Dimeren zu verhindern, müssen die organischen Phasen ständig bei relativ hohen Temperaturen von mehr als 120 °C gehalten werden. Die lange Verweilzeit bei hoher Temperatur führt jedoch häufig zu Einbußen bei der Endproduktqualität. So kann sich die Farbzahl (APHA) erhöhen, und der Gehalt an flüchtigen Basen kann sich ebenfalls erhöhen. Besonders kritisch ist dieses Phänomen insbesondere dann, wenn das Extraktwasser noch anorganische Komponenten enthält, wie sie bei der Extraktion von pigmentierten Polymeren anfallen.

Das Reaktionsgemisch muss darüber hinaus bei der Hydrolyse einphasig-flüssig vorliegen, was einen großen regeltechnischen Aufwand bedeutet. Außerdem muss das Extraktwasser in vorgelagerten Prozessschritten sehr stark aufkonzentriert werden, weil größere Mengen Wasser im weiteren Verfahrensverlauf nicht ausreichend abgeführt werden können. Hochkonzentrierte Extraktwasser neigen jedoch extrem stark zur Belagsbildung im System. Insbesondere bei der Verwendung von üblichen Wärmetauschern wie Plattenwärmetauschern oder Fallfilmverdampfern kommt es sehr häufig zur Bildung von Belägen, die von Zeit zu Zeit entfernt werden müssen. Besonders kritisch ist dieses Phänomen insbesondere dann, wenn das Extraktwasser noch anorganische Komponenten enthält, beispielsweise abgeleitet von Si, P, Mn, Sb oder Ti, wie sie bei der Extraktion von pigmentierten Polymeren anfallen. Damit erscheint das Verfahren verfahrenstechnisch anfällig, unwirtschaftlich und ungeeignet zur Herstellung von Produkten mit niedriger Eigenfarbe und niedrigem Gesamtaschegehalt.

Die EP-B-1 194 473 betrifft ein Verfahren zur Herstellung von Polyamiden aus Lactamen und Polyamid-Extrakten. Die Umsetzung wird dabei in Gegenwart von Metalloxiden, Beta-Zeolithen, Schichtsilikaten oder Kieselgelen, die dotiert sein können, als Heterogen-Katalysatoren durchgeführt. Die Heterogenkatalysatoren werden in einer Form eingesetzt, die mechanische Abtrennung aus dem Reaktionsgemisch erlaubt, und sie werden im Verlauf oder nach Ende der Polymerisation aus dem Reaktionsgemisch entfernt. Der Wassergehalt des Reaktionsgemisches beträgt 0,5 bis 13 Gew.-%. Es kann beispielsweise in einer ersten Stufe bei einer Temperatur im Bereich von 170 bis 310 °C und einem Druck im Bereich von 5 bis 40 bar gearbeitet werden, während in der zweiten Stufe adiabatisch entspannt wird, wobei Wasser und gegebenenfalls Lactammonomere und -oligomere durch Flashverdampfung ausgetragen werden.

Die EP-B-1 058 705 betrifft ein Verfahren zur Herstellung von Polyamiden durch Polymerisation von Lactamen in Gegenwart von Metalloxiden als Heterogen-Katalysatoren. Die Metalloxide werden wiederum in Form von Granulaten, Strängen, Festbetten oder mit Katalysator-beschichteten Füllkörpern oder Einbauten eingesetzt, die die mechanische Abtrennung aus dem Reaktionsgemisch erlauben. Sie werden im Verlauf oder nach Ende der Polymerisation aus dem Reaktionsgemisch entfernt. Der Wassergehalt der Eduktmischung beträgt besonders bevorzugt 0.005 bis 1 Gew.-%. Die Umsetzung der Reaktionsmischung kann auch in 3 Phasen erfolgen. Hierbei folgt einer ersten Hochdruckphase, in der die Reaktanden einphasig-flüssig vorliegen, eine zweiphasige Hochdruckphase im offenen Reaktor, der die Abtrennung von Kondensationsprodukten ermöglicht. In einer dritten Niederdruckphase wird schließlich der angestrebte Polymerisationsgrad durch Nachkondensation und effiziente Wasserabtrennung erreicht.

WO 97/08224 A, DE 199 25 906 A1, US 5 703 204 A und EP 0 459 206 A beschreiben Verfahren zur Herstellung von Polyamid 6 unter Verwendung von Polyamid-Extrakten.

Aufgabe der vorliegenden Erfindung ist die Bereitstellung eines Verfahrens zur Herstellung von Polyamiden auf Basis von Polyamid 6 ausgehend von wässrigen Extraktlösungen aus der Extraktion von Polyamiden auf Basis von Polyamid 6, wobei die Nachteile der bekannten Verfahren vermieden werden sollen. Insbesondere soll ein kontinuierliches Verfahren zur Verfügung gestellt werden, bei dem die Lösungsviskosität (RV) der Polyamide größer als 1,7 ist, und bei dem die Polyamide mit Hilfe einer Unterwassergranulierung granulierbar sind. Ferner sollen die hergestellten Polyamide bevorzugt sehr gute polymerchemische Kennzahlen aufweisen wie einen niedrigen Si-Gehalt, eine ausgewogene Endgruppenäquivalenz, bei der das Verhältnis von Aminoendgruppen zu Carboxylendgruppen (AEG/CEG) bevorzugt nicht größer als 1,25 ist. Die Produkte sollen bevorzugt eine geringe Eigenfarbe und einen niedrigen Gehalt an flüchtigen Basen aufweisen.

Die Aufgabe wird erfindungsgemäß gelöst durch Verwendung von Wendelrohrverdampfern zur Aufkonzentrierung wässriger Extraktlösungen aus der Extraktion von Polyamiden auf Basis von Polyamid 6.

Die Aufgabe wird ferner gelöst durch ein Verfahren zur Herstellung von Polyamiden auf Basis von Polyamid 6, umfassend die Stufen
b) einphasige oder zweiphasige Umsetzung von wässrigen Extraktlösungen aus der Extraktion von Polyamiden auf Basis von Polyamid 6, die gegebenenfalls mit Caprolactam, Aminocapronitril, Aminocapronsäure oder Gemischen davon angereichert sind, in einem Vorreaktor bei Drücken im Bereich von 5 bis 40 bar und Temperaturen im Bereich von 150 bis 300 °C, wobei bei der zweiphasigen Umsetzung die entstandene gasförmige Phase von der flüssigen Phase abgetrennt werden kann,
c) Austrag des Reaktionsgemisches aus Stufe b) durch einen Wendelrohrverdampfer bei einer Temperatur im Bereich von 220 bis 300 °C unter Druckabbau auf etwa Atmosphärendruck und Abtrennung einer gasförmigen Phase unter Erhalt einer flüssigen Phase,
d) weitere Umsetzung der flüssigen Phase aus Stufe c) bei Temperaturen im Bereich von 240 bis 300 °C und Drücken im Bereich von Atmosphärendruck bis 2 bar unter Abtrennung einer gasförmigen Phase.

Es wurde erfindungsgemäß gefunden, dass Wendelrohrverdampfer in vorteilhafter Weise zur Umsetzung und Aufkonzentrierung von wässrigen Extraktlösungen aus der Extraktion von Polyamiden auf Basis von Polyamid 6 eingesetzt werden können, wobei sehr hohe Konzentrationen erreicht werden. Bevorzugt werden Endkonzentrationen von mindestens 90 Gew.-%, insbesondere mindestens 95 Gew.-% erreicht. Es ist auch möglich, wässrige Extraktlösungen aufzukonzentrieren, die Pigmente enthalten, ohne dass es zur Abscheidung oder Belagsbildung durch die Pigmente kommt, was ein mechanisches Reinigen des Verdampfers in regelmäßigen Abständen erforderlich machen würde.

Beim Wendelrohrverdampfer handelt es sich insbesondere um ein Doppelmantelrohr, in dem ein Heizmedium im Heizmantel geführt wird und zur Temperierung dient. Technische Doppelmantelrohre, die erfindungsgemäß bevorzugt eingesetzt werden, weisen eine Länge im Bereich von 20 bis 70 m, besonders bevorzugt 40 bis 50 m, auf, wobei sie einen Innendurchmesser von bevorzugt 3 bis 20 cm, insbesondere 5 bis 10 cm aufweisen. Der Wendelrohrverdampfer verursacht im erfindungsgemäßen wässrigen Extrakt eine Wasserverdampfung, so dass es zu einer Volumenexpansion kommt. Dabei wird im erfindungsgemäßen Verfahren über den Wendelrohrverdampfer der Reaktionsdruck kontinuierlich abgebaut. Typischerweise liegt im Wendelrohrverdampfer im Downstream-Bereich eine Kernströmung durch Gas (Wasserdampf) vor, während ein Wandfilm als flüssige Phase vorliegt. Bei Bedarf kann am Einlass oder "Kopf" des Wendelrohres ein Inertgas zudosiert werden, beispielsweise Wasserdampf, N₂, Ar,CO₂ oder diese enthaltende Gasgemische, z. B. 16 bar Wasserdampf, um den Kernstrom zu erzeugen oder zu verstärken. Dies kann z. B. dann erforderlich sein, wenn nicht genügend Wasser in der organischen Phase vorhanden ist, beispielsweise bei Konzentrationen oberhalb von 98 %. Das zugesetzte Gas dient dann als Trägergas. Am Ende des Wendelrohrverdampfers kommt es dabei typischerweise zu einer Phasentrennung zwischen Dampfphase und flüssiger Phase. Die Kernströmung durch das Gas kann beispielsweise auf die Querschnittsfläche des Wendelrohrs bezogen einen Flächenanteil von 15 bis 35, insbesondere etwa 25 % ausmachen, während der Wandfilm, d. h. die flüssige Phase, 65 bis 85 %, insbesondere etwa 75 % der Querschnittsfläche ausmachen kann. Im erfindungsgemäßen Verfahren kann der Wendelrohrverdampfer als Ventil dienen, da am Verdampfereingang ein hoher Druck, beispielsweise von 20 bar, vorliegt, während am Ausgang des Reaktors etwa Atmosphärendruck herrscht. Der Druck wird damit kontinuierlich über die Länge des Wendelrohrs abgebaut.

Wendelrohrverdampfer sind beispielsweise aus der Auftrennung organischer Gemische in Leicht- und Hochsieder bekannt.

Polyamide auf Basis von Polyamid 6 sind im Rahmen der vorliegenden Erfindung solche Polyamide oder Copolyamide, die, bezogen auf die Monomergrundbausteine, mindestens 60 % Polyamid 6-Grundbausteine aufweisen. Sie können beispielsweise aus Caprolactam, Aminocapronitril, Aminocapronsäure oder Gemischen davon aufgebaut sein. Mögliche Copolyamidbausteine können sich beispielsweise von Dicarbonsäuren und Diaminen ableiten, wie es insbesondere beim Polyamid 66 der Fall ist. Der Anteil an Comonomeren beträgt vorzugsweise maximal 40 Gew.-%, besonders bevorzugt maximal 20 Gew.-%, insbesondere maximal 10 Gew.-%, bezogen auf das Copolyamid. Besonders bevorzugt wird mit reinem Polyamid 6 gearbeitet, das keine Comonomere in der Struktur enthält, sondern gegebenenfalls Kettenregler oder Lichtstabilisatoren in seiner Struktur aufweist.

Polyamid 6 oder Polyamid 6-Copolyamide werden typischerweise nach der Herstellung mit Wasser, häufig heißem Wasser, extrahiert. Die dabei erhaltenen wässrigen Extraktlösungen enthalten je nach Ausgangsmonomer bei der Polyamidherstellung beispielsweise bei einer Herstellung ausgehend von Caprolactam etwa 80 Gew.-% Caprolactam und etwa 20 Gew.-% Dimere, Trimere und höhere Oligomere von Caprolactam in wässriger Lösung. Der Extraktgehalt beträgt dabei häufig 5 bis 15 Gew.-%, besonders häufig 10 bis 13 Gew.-%. Diese Extraktwässer oder wässrigen Extraktlösungen werden erfindungsgemäß zur Polyamidherstellung eingesetzt, wobei eine Aufkonzentrierung in Wendelrohrverdampfern erfolgt. Dabei kann vor der Aufkonzentrierung im Wendelrohrverdampfer eine weitere Aufkonzentrierung vorgeschaltet sein. Die erste Aufkonzentrierung kann beispielsweise zu 60 bis 80 gew.-%igen Lösungen, insbesondere zu etwa 70 gew.-%igen Lösungen führen. Diese Lösungen werden sodann im Wendelrohrverdampfer auf eine Endkonzentration von vorzugsweise mindestens 90 Gew.-%, besonders bevorzugt mindestens 95 Gew.-% aufkonzentriert. Dabei ist es auch möglich, Extraktwässer einpigmentierter Polyamide einzusetzen, die anorganische Komponenten enthalten. Beispiele anorganischer Komponenten leiten sich von Si, P, Mn, Sb oder Ti ab. Beispielsweise kann TiO₂ in den Polyamiden und nach der Extraktion auch in den Extraktwässern vorliegen. Derartige pigmenthaltige Extraktwässer würden bei Fallfilmverdampfern zu einem Verkleben der Wärmetauscherflächen führen, wodurch die Verdampfungseigenschaften deutlich verschlechtert werden. Ein Ausfall des Verdampfers und die Notwendigkeit häufiger Reinigungen wären dabei die Folge.

Im Unterschied beispielsweise zu einem Fallfilmverdampfer liegen im Wendelrohrverdampfer hohe Strömungsgeschwindigkeiten vor, da viel Dampf entsteht, insbesondere bei Temperaturen im Bereich von 220 bis 300 °C. Die starke Dampfentstehung führt zu sehr kurzen Verweilzeiten und zu einer Selbstreinigung des Wendelrohrs. Daher können die von Fallfilmverdampfern bekannten Probleme vermieden werden.

Es ist erfindungsgemäß möglich, vor der Aufkonzentrierung der wässrigen Extraktlösungen diesen frische Monomere, beispielsweise Caprolactam, Aminocapronitril oder Aminocapronsäure zuzusetzen. Bevorzugt wird dabei Frischlactam zugesetzt. Der Zusatz von Caprolactam kann helfen, die Oligomeren in Lösung zu halten.

Das erfindungsgemäße Verfahren umfasst mindestens 3 Stufen oder Schritte. In der ersten Stufe b) erfolgt die einphasige oder zweiphasige Umsetzung von wässrigen Extraktlösungen aus der Extraktion von Polyamiden auf Basis von Polyamid 6, die gegebenenfalls mit Caprolactam, Aminocapronitril, Aminocapronsäure oder Gemischen davon angereichert sind, in einem Vorreaktor bei Drücken im Bereich von 5 bis 40 bar und Temperaturen im Bereich von 150 bis 300 °C. Dabei kann bei einer zweiphasigen Umsetzung die entstandene gasförmige Phase von der flüssigen Phase abgetrennt werden. Bevorzugte Drücke liegen im Bereich von 10 bis 30 bar, wobei bevorzugte Temperaturen im Bereich von 180 bis 240 °C liegen. Besonders bevorzugt wird Stufe b) bei einem Druck von etwa 18 bis 22 bar durchgeführt.

Die wässrigen Extraktlösungen können dabei vorzugsweise in einer Konzentration von 10 bis 80 Gew.-%, insbesondere 40 bis 75 Gew.-% vorliegen. Je nach gewählten Druck- und Temperaturbedingungen bilden sich eine flüssige Phase oder eine flüssige und eine Gasphase (zweiphasig) aus. In dieser Stufe wird eine Spaltung der Oligomeren unter Wassereinsatz durchgeführt. Es kann erfindungsgemäß vorteilhaft sein, in dieser Stufe beispielsweise Frischlactam zuzusetzen. Auch der Zusatz von Pigmenten ist möglich. Bei einer Anreicherung mit Caprolactam, Aminocapronitril, Aminocapronsäure oder Gemischen davon beträgt der zugesetzte Anteil, bezogen auf den im Gemisch bereits enthaltenen Anteil vorzugsweise maximal 60 %, besonders bevorzugt maximal 30 %, insbesondere maximal 15%. In pigmentierten Polyamiden auf Basis von Polyamid 6 beträgt der Pigmentantel vorzugsweise 0,03 bis 3 Gew.-%, insbesondere 0,3 bis 2 Gew.-%, bezogen auf das gesamte Polyamid. In dem erfindungsgemäßen Verfahren kann daher bereits bei Beginn der ersten Umsetzung ein entsprechender Pigmentanteil eingebracht werden. Es ist auch die Zumischung der Pigmente in einer der weiteren Reaktionsstufen möglich.

In der Stufe c) erfolgt der Austrag des Reaktionsgemisches aus Stufe b) durch einen Wendelrohrverdampfer bei einer Temperatur im Bereich von 220 bis 300 °C unter Druckabbau auf etwa Atmosphärendruck und Abtrennung einer gasförmigen Phase unter Erhalt einer flüssigen Phase. Die Entspannung des Reaktionsgemisches auf etwa Atmosphärendruck erfolgt damit durch Hindurchführen durch das Wendelrohr. Ein Zusetzen des Wendelrohrs wird wegen der hohen Strömungsgeschwindigkeiten zuverlässig verhindert. Die gasförmige Phase enthält ganz überwiegend Wasserdampf und wird nach dem Austritt aus dem Wendelrohrverdampfer abgetrennt. Zusätzlich wird eine Schmelze bei einer Temperatur von 220 bis 300 °C, vorzugsweise 220 bis 260 °C gewonnen. Die Dampfphase kann beispielsweise über eine Kolonne abgeführt werden, wobei die Kolonne wassergespült sein kann.

Der Ausdruck "etwa Atmosphärendruck" beschreibt den Atmosphärendruck mit Abweichungen von -0,5 bis +1 bar, insbesondere ±0,5 bar.

Die flüssige Phase wird nachfolgend in Stufe d) bei Temperaturen im Bereich von 240 bis 300 °C, vorzugsweise 250 bis 280 °C und Drücken im Bereich von Atmosphärendruck bis 2 bar, insbesondere von Atmosphärendruck bis 1,3 bar unter Abtrennung einer gasförmigen Phase weiter umgesetzt. Diese weitere Umsetzung kann auch als Nachkondensation/Nachpolymerisation verstanden werden.

Erfindungsgemäß ist es möglich, im vorstehenden Verfahren eine weitere Stufe a) vorzuschalten, in der eine Vorverdampfung der wässrigen Extraktlösungen aus der Extraktion von Polyamiden auf Basis von Polyamid 6 zur Aufkonzentrierung auf eine Konzentration im Bereich von 60 bis 80 Gew.-%, besonders bevorzugt 70 bis 80 Gew.-%, insbesondere etwa 75 Gew.-% durchgeführt wird. Diese Vorverdampfung kann beispielsweise mit üblichen Verdampfern wie Fallfilmverdampfern durchgeführt werden.

Das erfindungsgemäße Verfahren kann diskontinuierlich oder bevorzugt kontinuierlich durchgeführt werden. Dabei wird die Umsetzung in Stufe d) vorzugsweise in einem VK-Rohr durchgeführt. Beim VK-Rohr handelt es sich um einen kontinuierlich durchströmten rohrförmigen Reaktor. Geeignete Reaktoren sind dem Fachmann bekannt. Vorzugsweise erfolgt in Stufe c) eine Aufkonzentrierung der wässrigen Extraktlösung auf mehr als 90 Gew.-%, besonders bevorzugt auf mindestens 95 Gew.-%.

In diesem Zusammenhang beziehen sich alle Angaben in Gew.-% auf die vollständige Extraktlösung. Eine 90 Gew.-%ige Lösung weist damit einen Wasseranteil von 10 Gew.-% und einen (wasserfreien) Extraktanteil von 90 Gew.-% auf.

An die Stufe d) kann sich eine weitere Stufe e) anschließen, in der eine Granulierung der Polyamide auf Basis von Polyamid 6 erfolgt. Die Granulierung kann dabei beispielsweise als Unterwassergranulierung durchgeführt werden. Geeignete Verfahren sind dem Fachmann bekannt.

An die Granulierung schließt sich üblicherweise eine Extraktion an, wobei die erhaltenen Extraktwässer in die erfindungsgemäße Umsetzung zurückgeführt werden können.

Vor der Einspeisung der wässrigen Extraktlösungen in Stufe b) können diese kontinuierlich mit Hilfe eines Wärmetauschers erwärmt werden. Die Umsetzung in Stufe d) kann beispielsweise in einem kontinuierlich durchströmten Reaktor durchgeführt werden, der gewünschtenfalls Einbauten wie Sulzermischelemente enthalten kann, um Rückvermischungen zu vermeiden.

Bei der Herstellung von Copolyamiden können beispielsweise Dicarbonsäuren, Diamine oder Salze aus Dicarbonsäuren und Diaminen mitverwendet werden. Geeignete Dicarbonsäuren sind beispielsweise aliphatische C₄₋₁₀-α,ω-Dicarbonsäuren wie Bernsteinsäure, Glutarsäure, Adipinsäure, Pimelinsäure, Korksäure, Acelainsäure, Sebacinsäure, bevorzugt Adipinsäure und Sebacinsäure, besonders bevorzugt Adipinsäure. Auch aromatische C₈₋₂₀-Dicarbonsäuren wie Terephthalsäure können eingesetzt werden.

Als α, ω-Diamine mit 4 bis 10 Kohlenstoffatomen können Tetramethylendiamin, Pentamethylendiamin, Hexamethylendiamin, Heptamethylendiamin, Octamethylendiamin, Nonamethylendiamin und Decamethylendiamin eingesetzt werden, wobei Hexamethylendiamin besonders bevorzugt ist.

Unter den geeigneten Salzen der genannten Dicaronsäuren und Diamine ist insbesondere das Salz aus Adipinsäure und Hexamethylendiamin, so genanntes AH-Salz, bevorzugt.

Bei einer kontinuierlichen Verfahrensführung kann die Verweilzeit in verschiedenen Stufen vom Umsatz und auch vom Einsatz eines Katalysators abhängen. In Stufe b) kann die Verweilzeit beispielsweise 10 bis 120 Minuten betragen, in Stufe c) 0,1 bis 30 Minuten und in Stufe d) 6 bis 20 Stunden. Bevorzugt ist für Stufe b) eine Verweilzeit im Bereich von 20 bis 90 Minuten, für Stufe c) eine Verweilzeit im Bereich von 1 bis 10 Minuten und für Stufe d) eine Verweilzeit von 8 bis 15 Stunden. Erfindungsgemäß wird der Wassergehalt im Reaktionsgemisch so eingestellt, dass einerseits das mitgeführte Wasser nahezu quantitativ vom organischen Produktstrom entbunden wird, andererseits aber ausreichend Wasser in der organischen Phase verbleibt, um die Polymerisationsreaktion zur gewünschten Viskosität zu führen.

Sofern im erfindungsgemäßen Verfahren mit der Gas- und Dampfphase auch Monomere abgetrennt werden, so können diese mit Hilfe von Destillationskolonnen abgetrennt und in die Umsetzung zurückgeführt werden.

Ferner ist es möglich, aus der flüssigen Phase gegebenenfalls vorhandenes Wasser mittels eines Inertgases wie Stickstoff auszutreiben.

Die Verweilzeit des Reaktionsgemisches in der Stufe d) richtet sich in erster Linie nach der gewünschten relativen Viskosität des herzustellenden Polyamids und der gewählten Temperatur. Beispielsweise kann man bei Einsatz eines Gemisches aus Caprolactam, Oligomer und Wasser bei 12 Stunden Verweilzeit und einer Temperatur im Bereich von 250 bis 270 °C ein Polyamid 6 mit einer relativen Viskosität von 2,2 erhalten, während man bei 24 Stunden Verweilzeit unter ansonsten gleichen Bedingungen eine relative Viskosität von 2,7 erhalten kann. Die Viskosität wird dabei stets bei einer Temperatur von 25 °C und einer Konzentration von 1 g Polymer pro 100 ml in 96 gew.-%iger Schwefelsäure bestimmt.

Aus Stufe d) kann man den Reaktionsaustrag beispielsweise mit Hilfe einer Pumpe austragen. Eine nachfolgende Aufarbeitung kann beispielsweise wie in DE-A-43 21 683 beschrieben durchgeführt werden. Es sei insbesondere auf Seite 3, Zeile 54 bis Seite 4, Zeile 3 dieser Schrift verwiesen. Besonders bevorzugt ist eine Unterwassergranulierung.

Es ist erfindungsgemäß möglich, den Gehalt an cyclischem Dimer im Polyamid 6 weiter zu vermindern, in dem man das Polyamid zuerst mit einer wässrigen Lösung von Caprolactam und anschließend mit Wasser extrahiert oder es einer Gasphasenextraktion unterzieht, wie sie beispielsweise in EP-A-0 284 968 beschrieben ist.

Es ist erfindungsgemäß zudem möglich, übliche Additive und Füllstoffe wie Pigmente, insbesondere Titandioxid (Anatas und/oder Rutil), Siliciumdioxid und Kalk, Kettenregler wie aliphatische und aromatische Carbon- und Dicarbonsäuren wie Propionsäure, Essigsäure, Benzoesäure, Terephthalsäure sowie Triacetondiamin, Stabilisatoren wie Kupfer(I)halogenide und Alkalimetallhalogenide, Nukleierungsmittel wie Magnesiumsilikat oder Bornitrid, Katalysatoren wie phosphorige Säure sowie Antioxidantien in Mengen im Bereich von beispielsweise 0,01 bis 5 Gew.-%, besonders bevorzugt 0,2 bis 2 Gew.-% zuzusetzen, bezogen auf die Menge an eingesetzten Monomeren. Geeignete Katalysatoren sind beispielsweise in der EP-B-1 194 473 beschrieben.

Die erfindungsgemäß erhaltenen Polyamide kann man zur Herstellung von Fasern, Folien und Werkstoffen einsetzen.

Die Erfindung wird nachstehend anhand von Beispielen näher erläutert.

### Beispiele

Die Bestimmung der Aminoendgruppen und Carboxylendgruppen (AEG und CEG) erfolgte nach der in WO 95/01389, Seite 6, Zeile 35 bis Seite 7, Zeile 40 beschriebenen Methode.

Die relative Viskosität (RV) wurde bei einer Temperatur von 25 °C und einer Konzentration von 1 g Polymer pro 100 ml in 96 gew.-%iger Schwefelsäure bestimmt.

In der nachstehenden Tabelle sind die Versuchsbedingungen für Stufe b) und c) angegeben. In Stufe c) wurde in einem Wendelrohr umgesetzt. Die Nachkondensation in Stufe d) wurde bei einer Temperatur von 260 °C, einem Druck von 200 mbar und einer Verweilzeit von 12 Stunden durchgeführt. Die Verweilzeit in Stufe b) betrug etwa 10 bis 30 Minuten; in Stufe c) etwa 1 Minute.

In der nachfolgenden Tabelle bezieht sich PAW auf die Konzentration des Extrakts von Polyamid 6, das unter Einsatz von Caprolactam hergestellt wurde. Die Farbabweichung db gibt das Maß der Vergilbung an. Die Ergebnisse sind in der nachstehenden Tabelle zusammengefasst.

| **Prozessparameter** | | | | | | | **Produkteigenschaften nach Stufe 3** | | | | | | |
|---|---|---|---|---|---|---|---|---|---|---|---|---|---|
| Beispiel | Konzentrierter Extrakt, 75 %ig PAW % | Leitfähigkeit µS/cm | Si-Gehalt PAW ppm | Stufe Bar | 1 Stufe °C | 1 Stufe 2 °C | RV | Extract | APHA | Farbabweichung Maß für Vergilbung dB | Si-Gehalt ppm | AEG mmol/kg | CEG mmol/kg |
| 1 | 75 | - | 10 | 15 | 230 | 215 | 2,21 | 12 | 1 | 2,6 | 1 | 55 | 43 |
| 2 | 75 | - | 0 | 15 | 222 | 253 | 2,27 | 11 | 2 | 2,4 | 0 | 52 | 56 |
| 3 | 80 | 100 | - | 13 | 220 | 225 | 2,25 | 10 | 1 | - | 1 | 52 | 68 |
| 4 | 70 | 80 | 5 | 18 | 225 | 210 | 2,19 | 12 | 1 | - | 1 | 60 | 50 |

| | | | | | | | | | | | | | |
|---|---|---|---|---|---|---|---|---|---|---|---|---|---|
| Stufe 1: 10 min - 30 min übliche Verweilzeiten Stufe 2: Wendelrohr: sec.-min; ca. 1 Minute | | | | | | | | | | | | | |

## Patentansprüche

1. Verwendung von Wendelrohrverdampfern zur Aufkonzentrierung wässriger Extraktlösungen aus der Extraktion von Polyamiden auf Basis von Polyamid 6.

2. Verwendung nach Anspruch 1, **dadurch gekennzeichnet, dass** die wässrigen Extraktlösungen Pigmente enthalten.

3. Verwendung nach Anspruch 1 oder 2, **dadurch gekennzeichnet, dass** die wässrigen Extraktlösungen auf eine Endkonzentration von mindestens 90 Gew.-% aufkonzentriert werden.

4. Verfahren zur Herstellung von Polyamiden auf Basis von Polyamid 6, umfassend die Stufen
b) einphasige oder zweiphasige Umsetzung von wässrigen Extraktlösungen aus der Extraktion von Polyamiden auf Basis von Polyamid 6, die gegebenenfalls mit Caprolactam, Aminocapronitril, Aminocapronsäure oder Gemischen davon angereichert sind, in einem Vorreaktor bei Drücken im Bereich von 5 bis 40 bar und Temperaturen im Bereich von 150 bis 300 °C, wobei bei der zweiphasigen Umsetzung die entstandene gasförmige Phase von der flüssigen Phase abgetrennt werden kann,
c) Austrag des Reaktionsgemisches aus Stufe b) durch einen Wendelrohrverdampfer bei einer Temperatur im Bereich von 220 bis 300 °C unter Druckabbau auf etwa Atmosphärendruck und Abtrennung einer gasförmigen Phase unter Erhalt einer flüssigen Phase,
d) weitere Umsetzung der flüssigen Phase aus Stufe c) bei Temperaturen im Bereich von 240 bis 300 °C und Drücken im Bereich von Atmosphärendruck bis 2 bar unter Abtrennung einer gasförmigen Phase.

5. Verfahren nach Anspruch 4, **dadurch gekennzeichnet, dass** die Herstellung kontinuierlich erfolgt.

6. Verfahren nach Anspruch 5, **dadurch gekennzeichnet, dass** die Umsetzung in Stufe b) in einem VK-Rohr durchgeführt wird.

7. Verfahren nach einem der Ansprüche 4 bis 6, **dadurch gekennzeichnet, dass** in Stufe c) eine Aufkonzentrierung der wässrigen Extraktlösung auf mehr als 90 Gew.-% erfolgt.

8. Verfahren nach einem der Ansprüche 4 bis 7, **dadurch gekennzeichnet, dass** vor Stufe b) in einer Stufe a) eine Vorverdampfung wässriger Extrakte aus der Extraktion von Polyamiden auf Basis von Polyamid 6 zur Aufkonzentrierung auf eine Konzentration im Bereich von 60 bis 80 Gew.-% durchgeführt wird.

9. Verfahren nach einem der Ansprüche 4 bis 8, **dadurch gekennzeichnet, dass** nach Stufe d) in einer Stufe e) eine Granulierung der Polyamide auf Basis von Polyamid 6 erfolgt.

10. Verfahren nach einem der Ansprüche 4 bis 9, **dadurch gekennzeichnet, dass** in Stufe c) ein Trägergas zugesetzt wird.

## Claims

1. The use of helical tube evaporators for concentrating aqueous extract solutions from the extraction of polyamides based on polyamide 6.

2. The use according to claim 1, wherein the aqueous extract solutions comprise pigments.

3. The use according to claim 1 or 2, wherein the aqueous extract solutions are concentrated to an end concentration of at least 90% by weight.

4. A process for preparing polyamides based on polyamide 6, comprising the stages of
b) monophasic or biphasic reaction of aqueous extract solutions from the extraction of polyamides based on polyamide 6, which may be enriched with caprolactam, aminocapronitrile, aminocaproic acid or mixtures thereof, in a prereactor at pressures in the range from 5 to 40 bar and temperatures in the range from 150 to 300°C, the gaseous phase formed being removable from the liquid phase in the case of the biphasic reaction,
c) discharge of the reaction mixture from stage b) through a helical tube evaporator at a temperature in the range from 220 to 300°C with pressure reduction to about atmospheric pressure and removal of a gaseous phase to obtain a liquid phase,
d) further reaction of the liquid phase from stage c) at temperatures in the range from 240 to 300°C and pressures in the range from atmospheric pressure to 2 bar with removal of a gaseous phase.

5. The process according to claim 4, wherein the preparation is effected continuously.

6. The process according to claim 5, wherein the reaction in stage b) is performed in a VK tube.

7. The process according to any of claims 4 to 6, wherein the aqueous extract solution is concentrated in stage c) to more than 90% by weight.

8. The process according to any of claims 4 to 7, wherein, before stage b), a preevaporation of aqueous extracts from the extraction of polyamides based on polyamide 6 is performed in a stage a) for concentration to a concentration in the range from 60 to 80% by weight.

9. The process according to any of claims 4 to 8, wherein, after stage d), the polyamides based on polyamide 6 are granulated in a stage e).

10. The process according to any of claims 4 to 9, wherein a carrier gas is added in stage c).

## Revendications

1. Utilisation d'évaporateurs à tube hélicoïdal pour la concentration de solutions aqueuses d'extraits issues de l'extraction de polyamides à base de polyamide 6.

2. Utilisation selon la revendication 1, **caractérisée en ce que** les solutions aqueuses d'extraits contiennent des pigments.

3. Utilisation selon la revendication 1 ou 2, **caractérisée en ce que** les solutions aqueuses d'extraits sont concentrées à une concentration finale d'au moins 90 % en poids.

4. Procédé de fabrication de polyamides à base de polyamide 6, comprenant les étapes suivantes :
b) la réaction monophasée ou biphasée de solutions aqueuses d'extraits issues de l'extraction de polyamides à base de polyamide 6, qui sont éventuellement enrichies avec du caprolactame, de l'aminocapronitrile, de l'acide aminocaproïque ou leurs mélanges, dans un pré-réacteur à des pressions dans la plage allant de 5 à 40 bar et à des températures dans la plage allant de 150 à 300 °C, la phase gazeuse formée lors de la réaction biphasée pouvant être éliminée de la phase liquide,
c) le déchargement du mélange réactionnel de l'étape b) par un évaporateur à tube hélicoïdal à une température dans la plage allant de 220 à 300 °C avec réduction de la pression à environ la pression atmosphérique et séparation d'une phase gazeuse pour obtenir une phase liquide,
d) la réaction supplémentaire de la phase liquide de l'étape c) à des températures dans la plage allant de 240 à 300 °C et à des pressions dans la plage allant de la pression atmosphérique jusqu'à 2 bar pour séparer une phase gazeuse.

5. Procédé selon la revendication 4, **caractérisé en ce que** la fabrication a lieu en continu.

6. Procédé selon la revendication 5, **caractérisé en ce que** la réaction de l'étape b) est réalisée dans un tube VK.

7. Procédé selon l'une quelconque des revendications 4 à 6, **caractérisé en ce qu'**une concentration de la solution aqueuse d'extrait à plus de 90 % en poids a lieu lors de l'étape c).

8. Procédé selon l'une quelconque des revendications 4 à 7, **caractérisé en ce qu'**une pré-évaporation d'extraits aqueux issus de l'extraction de polyamides à base de polyamide 6 pour la concentration à une concentration dans la plage allant de 60 à 80 % en poids est réalisée lors d'une étape a) avant l'étape b).

9. Procédé selon l'une quelconque des revendications 4 à 8, **caractérisé en ce qu'**une granulation des polyamides à base de polyamide 6 a lieu lors d'une étape e) après l'étape d).

10. Procédé selon l'une quelconque des revendications 4 à 9, **caractérisé en ce qu'**un gaz porteur est ajouté lors de l'étape c).
